# EUROPEAN PATENT APPLICATION

(11) **EP 1 696 593 A2**
(43) Date of publication of application: **30.08.2006**
(21) Application number: 06003740.5
(22) Date of filing: 23.02.2006
(51) Int. Cl.: H04H 1/00

(54) **Acquisition of group page identifiers at a new destination of movement**

(30) Priority: 28.02.2005 JP 2005053951
(71) Applicant: NEC Corporation, Minato-ku Tokyo (JP)
(72) Inventor: Tamura, Toshiyuki, Tokyo 108-8001 (JP)
(74) Representative: Glawe, Delfs, Moll

(57) **Abstract**

The group page system of the present invention is composed of: portable terminals, broadcast distribution servers that distribute data by broadcast to the portable terminals, and group page identifier servers that manage group page identifiers used by the portable terminals to scan data that have been distributed by broadcast from the broadcast distribution servers. Each portable terminal transmits position information of the portable terminal and network information of the network to which the portable terminal is connected to the group page identifier servers at a prescribed timing for updating. Each group page identifier server specifies the broadcast distribution server that distributes data by broadcast to a portable terminal based on the position information and network information from the portable terminal, and transmits to the portable terminal the group page identifier for scanning data that have been distributed from the broadcast distribution server that has been specified.

## Description

### Background of the Invention:

### 1. Field of the Invention:

The present invention relates to a technology for distributing data (including, for example, software) by means of broadcast to a plurality of portable terminals.

### 2. Description of the Related Art:

In recent years, broadcast services have come into practical use for simultaneously distributing data by broadcast such as software to a plurality of portable terminals. One example of this type of broadcast service is the service referred to as MBMS (Multimedia Broadcast/Multicast Service) disclosed in, for example, Document 1 below:

Document 1: 3GPP TS 23.246 V.6.2.0 Multimedia Broadcast/Multicast Service (MBMS); Architecture and functional description (Release 6)

According to MBMS, a broadcast distribution server distributes data by broadcast to which is added a group page identifier referred to as TMGI (Temporary Mobile Group Identity). A portable terminal scans this data only when a group page identifier set to that terminal has been added to the data.

However, in a broadcast service of the prior art, group page identifiers are freely assigned by the portable network provider, and group page identifiers are fixed to portable terminals, or are set by a method characteristic of tne portable network provider.

As a result, a user at a destination of movement, even though able to connect to the network of a portable network provider by using a roaming service of the destination of movement, is unable to acquire a group page identifier in that network. The user is therefore unable to scan data that are by broadcast distributed in the broadcast service of the destination of movement, and is unable to continue to receive the broadcast service.

As one method that can be considered for continuing to receive the broadcast service, the user may perform an operation for submitting a request for a group page identifier to the portable network provider of the destination of movement to acquire a group page identifier. However, this method places an excessive burden on the user.

### Summary of the Invention:

It is an object of the present invention to provide a group page system, a portable terminal, and a group page identifier server that enable users to infallibly and effectively continue to receive broadcast services through the automatic acquisition of group page identifiers at a destination of movement.

The group page system of the present invention is composed of: portable terminals, broadcast distribution servers for distributing data by broadcast to the portable terminals, and group page identifier servers for managing group page identifiers that are used by the portable terminals for scanning data that have been distributed by broadcast from the broadcast distribution servers.

The portable terminals each include a terminal information transmitter for transmitting, to the group page identifier servers at prescribed timing for updating the group page identifiers, terminal information that includes network information that indicates the network to which the portable terminal is connected and position information of the portable terminal. In addition, the group page identifier server includes a group page identifier transmitter for specifying the broadcast distribution server that distributes data by broadcast to a relevant portable terminal based on the terminal information that has been transmitted from the portable terminal and for transmitting to the portable terminal group page identifiers for scanning data that have been distributed from broadcast distribution servers that have been specified.

According to this configuration, a user that uses a portable terminal is able to automatically acquire from the group page identifier servers group page identifiers for scanning data that are distributed by broadcast from the broadcast distribution servers according to the position of the portable terminal and the network to which the portable terminal is connected.

In this way, a user using a portable terminal is able to continuously receive a broadcast service without being conscious of his or her movement even when the user implements roaming in the network of the portable network provider of a destination of movement and thus causes a change of network or a change of area.

In addition, the group page system of the present invention may also be of a configuration in which each portable terminal further includes an application information management unit for managing, for each application installed in the portable terminal, group page identifiers to scan data when these data are distributed by broadcast from broadcast distribution servers in accordance with the relevant application and managing the timing for updating these group page identifiers. The terminal information transmitter transmits, for each application installed in a portable terminal, terminal information to the group page identifier server at the timing for updating group page identifiers that are managed by the group page identifier management unit.

According to this configuration, a user that uses a portable terminal is able to acquire only the group page identifiers for scanning data that accords with the applications that are installed in the portable terminal and is therefore able to receive a broadcast service for only necessary data.

In addition, the group page system of the present invention may be of a configuration that further includes an external device provided with: a data storage device for storing data that are distributed by broadcast by broadcast distribution servers and a group page identifier server for managing group page identifiers that are used by the portable terminal to scan data that have been stored in the data storage device; this data storage device and group page identifier server being provided as a set.

According to this configuration, data that are distributed by broadcast and the group page identifiers for scanning these data can be managed as a set, whereby information management relating to a broadcast service can be greatly simplified.

The above and other objects, features, and advantages of the present invention will become apparent from the following description with reference to the accompanying drawings which illustrate examples of the present invention.

### Brief Description of the Drawings:

FIG. 1 shows the configuration of a group page system according to an embodiment of the present invention;
FIG. 2 shows an example of the configuration of the group page identifier server shown in FIG. 1;
FIG. 3 shows an example of the data that are managed by the group page identifier management unit shown in FIG. 2;
FIG. 4 shows an example of the configuration of the portable terminal shown in FIG. 1;
FIG. 5 shows an example of data that are managed by the area information management unit shown in FIG. 4;
FIG. 6 shows an example of data that are managed by the application information management unit shown in FIG. 4;
FIG. 7 is a flow chart for explaining the operation of updating group page identifiers by means of the group page system of an embodiment of the present invention;
FIG. 8 is a view for explaining actual example 1 of the group page system shown in FIG. 1;
FIG. 9 is a view for explaining an example of the method of broadcast distribution by means of the broadcast distribution server in FIG. 8;
FIG. 10 is a view for explaining actual example 2 of the group page system shown in FIG. 1;
FIG. 11 is a view for explaining actual example 3 of the group page system shown in FIG. 1;
FIG. 12 is a view for explaining an example of the broadcast distribution method by means of the broadcast distribution server in FIG. 11; and
FIG. 13 is a view for explaining actual example 4 of the group page system shown in FIG. 1.

### Detailed Description of the Preferred Embodiments:

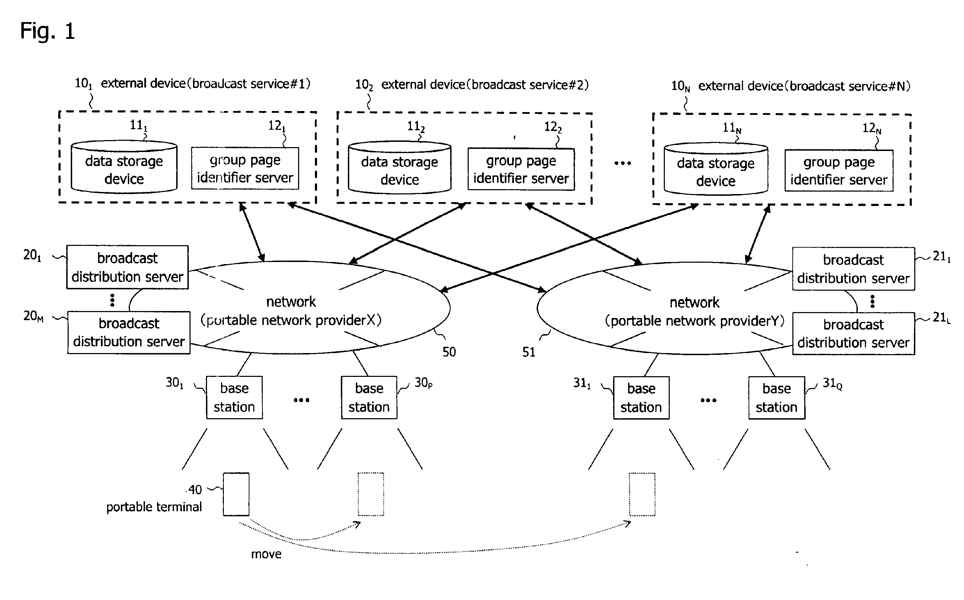

Referring now to FIG. 1, the group page system according to an embodiment of the present invention includes: external devices 10₁-10_{N}; broadcast distribution servers 20₁-20_{M} and base stations 30₁-30_{P} that are connected to network 50 of portable network provider X; broadcast distribution servers 21₁-21_{L} and base stations 31₁-31_{Q} that are connected to network 51 of portable network provider Y; and portable terminal 40. In FIG. 1, only one portable terminal 40 and only two networks 50 and 51 are shown for the sake of simplifying the explanation, but the present invention is not limited to these numbers.

External devices 10₁-10_{N} are provided for each broadcast service #1-#N offered to portable terminal 40. Services that can be considered as broadcast services #1-#N include: a service for distributing OS (Operating System) software updates according to the OS of portable terminal 40; a service for distributing vaccine data updates for eradicating a virus to the OS of portable terminal 40; a service for distributing application software updates according to the applications of portable terminal 40; a service for distributing emergency notification data; a service for distributing advertisements, and a service for distributing local information.

External device 10₁ is equipped with data storage device 11₁ for storing data that are distributed by broadcast to portable terminal 40; and group page identifier server 12₁ for managing the group page identifiers that correspond to the TMGI of MBMS and that are used by portable terminal 40 to scan data that have been distributed by broadcast, these two components being provided as a set. In addition, the configuration of other external devices 10₂-10_{N} is identical to that of external device 10₁.

Broadcast distribution server 20₁ appends the group page identifier that has been assigned to it to data that are stored in data storage device 11₁ and distributes the data by broadcast from network 50 and, by way of base stations 30₁-30_{P}, to portable terminals that are positioned within a prescribed data distribution range. In addition, the configuration of the other broadcast distribution servers 20₂-20_{M} and 21₁-21_{L} is identical to that of broadcast distribution server 20₁. In other words, in the present embodiment, group page identifiers are provided to correspond with each of the broadcast distribution servers 20₁-20_{M} and 21₁-21_{L}.

Applications are installed in portable terminal 40 to correspond to each of the broadcast services #1-#N. Portable terminal 40 further manages, for each application, group page identifiers for scanning data that accord with the relevant application that are distributed by broadcast from broadcast distribution servers 20₁-20_{M} and 21₁-21_{L} and the timing for updating the group page identifiers. Portable terminal 40 acquires group page identifiers from any of group page identifier server 12₁-12_{N} at the timing for updating and updates the group page identifiers. Portable terminal 40 is further able to, for example, use a browser function to communicate with group page identifier servers 12₁₋12_{N}. When data are distributed by broadcast from broadcast distribution servers 20₁-20_{M} and 21₁-21_{L}, portable terminal 40 compares the group page identifiers that are appended to these data with group page identifiers that are managed by portable terminal 40, and when there is a match between group page identifiers, portable terminal 40 commences scanning the data. Portable terminal 40 is thus able to import data that are required by the applications of portable terminal 40.

The following explanation regards the details of the configuration of group page identifier servers 12₁-12_{N} and portable terminal 40 that are the characteristic parts of the present invention.

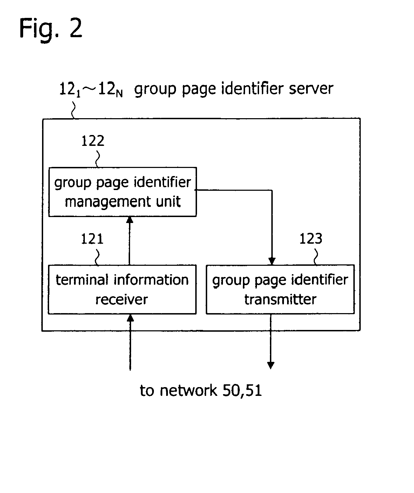

Referring to FIG. 2, each of the group page identifier servers 12₁-12_{N} includes terminal information receiver 121, group page identifier management unit 122, and group page identifier transmitter 123.

Terminal information receiver 121 receives from portable terminal 40 terminal information that includes: network information that indicates the network to which portable terminal 40 is currently connected at the time of requesting group page identifiers; and position information that indicates the current position of portable terminal 40. The position information is GPS (Global Positioning System) position information of latitude/longitude measured by portable terminal 40 through the use of a GPS function, or base station information that indicates the base station to which portable terminal 40 is currently connected.

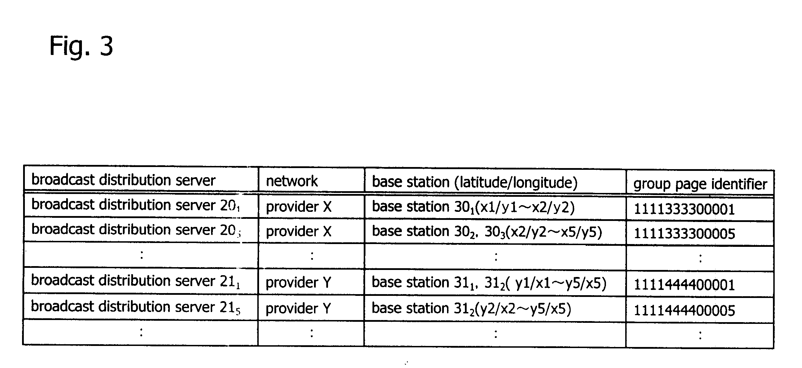

As shown in FIG. 3, group page identifier management unit 122 manages, for each broadcast distribution server, the group page identifier that is the identifier of that broadcast distribution server. Group page identifier management unit 122 further manages the data distribution range (indicated by the network, base station, latitude/longitude) within which the broadcast distribution server distributes data. Group page identifier management unit 122 manages only the group page identifier of the broadcast distribution server that distributes data that are stored in the data storage device within the same external device.

At the time of a request for group page identifiers from portable terminal 40, group page identifier transmitter 123 refers to group page identifier management unit 122 based on the terminal information that has been received by terminal information receiver 121 to specify the broadcast distribution server that distributes data to portable terminal 40, and transmits the group page identifier of the specified broadcast distribution server to portable terminal 40.

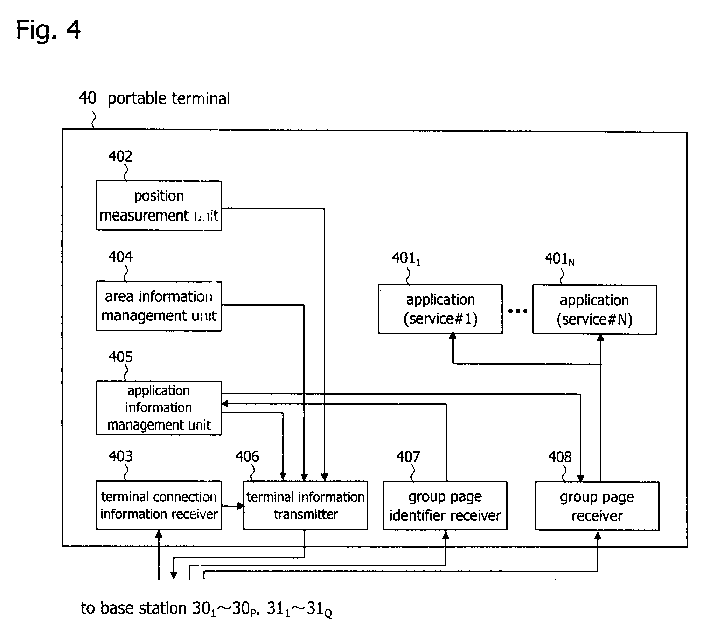

Referring to FIG. 4, portable terminal 40 includes applications 401₁₋401_{N}, position measurement unit 402, terminal connection information receiver 403, area information management unit 404, application information management unit 405, terminal information transmitter 406, group page identifier receiver 407, and group page receiver 408.

Applications 401₁-401_{N} are installed for each of broadcast services #1-#N, and these applications process the data distributed by broadcast when receiving a broadcast service that has been provided. These applications include a variety of applications, such as applications that perform updating to the updates of OS software, applications that perform updating to the updates of vaccine data, applications that perform updating to the updates of application software, applications that display emergency notification data, applications that display advertising, and applications that display local information.

Position measurement unit 402 uses information from a GPS satellite (not shown) to measure the latitude/longitude of portable terminal 40 as GPS position information.

When there is a change of base station or a change of network, or when a power supply is introduced, terminal connection information receiver 403 receives from the base station that is currently connected terminal connection information that includes base station information that indicates the base station and network information that indicates the network to which the base station is connected.

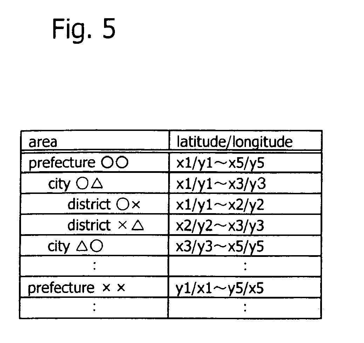

As shown in FIG. 5, area information management unit 404 manages the area specified by latitude/longitude that is measured as GPS position information by position measurement unit 402.

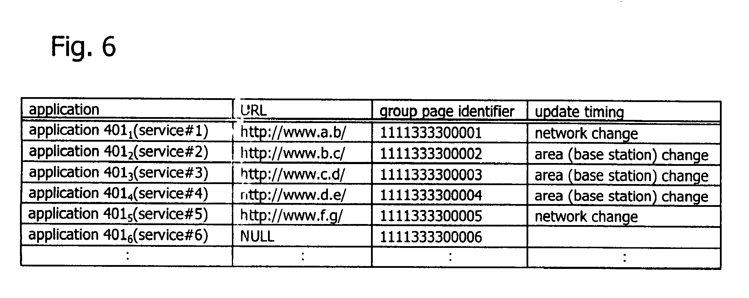

As shown in FIG. 6, application information management unit 405 manages the URLs, group page identifiers, and the timing for updating group page identifiers for each of applications 401₁-401_{N}.

The URL is address information that indicates the address on the Internet of the group page identifier server that is accessed at the timing for updating the group page identifier of a relevant application. For example, in FIG. 6, the group page identifier server that is accessed to update the group page identifier of application 401₁ (service #1) is the group page identifier server that has the address URL "http://www.a.b/." The group page identifier of application 401₆ (service #6) is fixed and the data NULL is therefore set in place of a URL. An example of such a service #6 would be a service that is effective only in a specific network.

The group page identifier is used for scanning data that have been distributed by broadcast in accordance with the relevant application and is the identifier of the broadcast distribution server that distributes the data.

The timing for updating is the timing for updating the group page identifier of a relevant application. For example, FIG. 6 shows that applications 401₁, 401₅ (services #1, #5) updates the group page identifier at the timing when the network to which portable terminal 40 is connected is a changed (roaming in the network of another portable network provider). Examples of this type of services #1, #5 that can be considered include an application software updating service and a virus-eradication vaccine data updating service. FIG. 6 further shows that applications 401₂-401₄ (services #2-#4) perform updating of group page identifiers at the timing when there is a change in the area (base station) in which portable terminal 40 is located. Examples of such services #2-#4 that can be considered include an emergency notification service, an advertisement distribution service, and a local information notification service.

Terminal information transmitter 406 determines that a network change or area change has occurred based on terminal connection information that has been received by terminal connection information receiver 403, or determines that an area change has occurred by referring to area information management unit 404 based on position information measured by position measurement unit 402. In this case, terminal information transmitter 406 refers to application information management unit 405 to determine whether there is an application that takes the timing when a network change or area change occurs as the timing for updating group page identifiers. If there is an application that takes the timing when a network change or area change occurs as the timing for updating group page identifiers, terminal information transmitter 406 transmits the terminal information of portable terminal 40 (network information and position information) to the group page identifier server with the URL that corresponds to the relevant application as the destination address to request the group page identifier.

Group page identifier receiver 407, upon receiving a group page identifier from a group page identifier server, updates the group page identifier managed by application information management unit 405 for that application to the group page identifier that has been received from the group page identifier server.

When data are distributed by broadcast from a broadcast distribution server, group page receiver 408 begins scanning to import these data when the group page identifier appended to these data match with a group page identifier managed by application information management unit 405. Group page receiver 408 then transfers the data that have been taken in to the relevant application of applications 401₁-401_{N}.

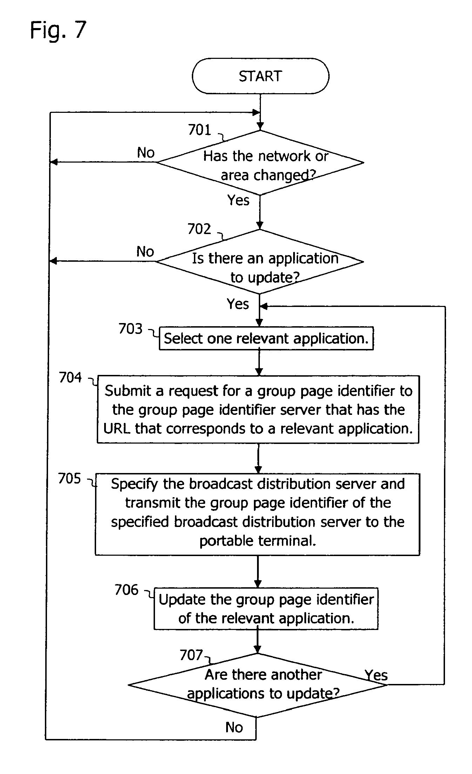

The following explanation regards the operation of updating a group page identifier managed by portable terminal 40 with reference to the flow chart of FIG. 7.

When there is a change of base station or a change of network, or when the power supply is introduced for portable terminal 40, terminal connection information receiver 403 receives from the currently connected base station base station information that indicates that base station and network information that indicates the network to which the base station is connected. On the other hand, position measurement unit 402 uses a GPS function to measure the latitude/longitude of portable terminal 40 as GPS position information either constantly or at fixed time intervals.

In Step 701, terminal information transmitter 406 uses terminal connection information that has been received by terminal connection information receiver 403 to determine whether a change of network has occurred, and uses terminal connection information that has been received by terminal connection information receiver 403 or consults area information management unit 404 based on position information that have been obtained by position measurement unit 402 to determine whether a change of area has occurred.

In Step 702, upon determining that a network change or area change has occurred, terminal information transmitter 406 consults application information management unit 405 to determine if there is an application that takes the timing when a network change or area change occurs as the timing for updating the group page identifier.

In FIG. 6, for example, if a network change occurs, terminal information transmitter 406 determines this as the timing for updating the group page identifier of applications 401₁, 401₅ (services #1, #5), and if an area change occurs, terminal information transmitter 406 determines this as the timing for updating the group page identifiers of applications 401₂-401₄ (services #2-#4). However, the group page identifier for application 401₆ (service #6) is fixed, and the group page identifier therefore is not updated even in the event of a network change or area change.

If there are applications in which the timing for updating the group page identifier has come, terminal information transmitter 406 first selects one application in Step 703. Terminal information transmitter 406 then refers to application information management unit 405 to check the URL that corresponds to the relevant application and submits a request for the group page identifier to the group page identifier server that has this URL.

As an example, when updating the group page identifier of application 401₁ (service #1) in FIG. 6, terminal information transmitter 406 submits a request for the group page identifier to group page identifier server 12₁ that has the URL "http://www.a.b/."

At this time, terminal information transmitter 406 must provide information for specifying, in the group page identifier server that is the destination of the request for the group page identifier, the broadcast distribution server that distributes data to portable terminal 40. Terminal information transmitter 406 transmits to the group page identifier server terminal information that includes: network information that indicates the network to which portable terminal 40 is currently connected; and position information that indicates the current position of portable terminal 40. This position information is either GPS position information of the latitude/longitude measured by position measurement unit 402 or base station information that indicates the base station.

In the group page identifier server that is the destination of the request for group page identifier, group page identifier transmitter 123 next refers in Step 705 to group page identifier management unit 122 based on the terminal information transmitted from portable terminal 40. Group page identifier transmitter 123 thus specifies the broadcast distribution server that distributes data to portable terminal 40 and transmits the group page identifier of the broadcast distribution server that has been specified to portable terminal 40.

In Step 706, group page identifier receiver 407 in portable terminal 40 next updates the group page identifier managed by application information management unit 405 for the relevant application to the group page identifier that has been received from the group page identifier server.

In Step 707, if there is another application in which the timing for updating the group page identifier has come, terminal information transmitter 406 next returns to the process of Step 703 and selects another application to perform the same process, and if there are no other applications, returns to the process of Step 701.

When data to which updated group page identifiers have been appended are subsequently distributed by broadcast, group page receiver 408 begins scanning these data to import the data, and then transfers the data to the relevant applications 401₁-401_{N}. In this way, the broadcast service can be continuously received.

In the following explanations, actual examples of the operation of the group page system of the present embodiment are taken up and described in greater detail. However, the actual examples described in the following explanations are in any case only examples and it goes without saying that the present invention is not limited to these actual examples.

### Actual Example 1

This example is for a case of an application for a vaccine data updating service for virus eradication. In other words, an application (assumed to be application 401₁) for performing such tasks as updating vaccine data, that is distributed when a vaccine data updating service is offered, is installed in portable terminal 40. In addition, the timing for updating the group page identifiers of the present example is assumed to be the timing when a change of network occurs.

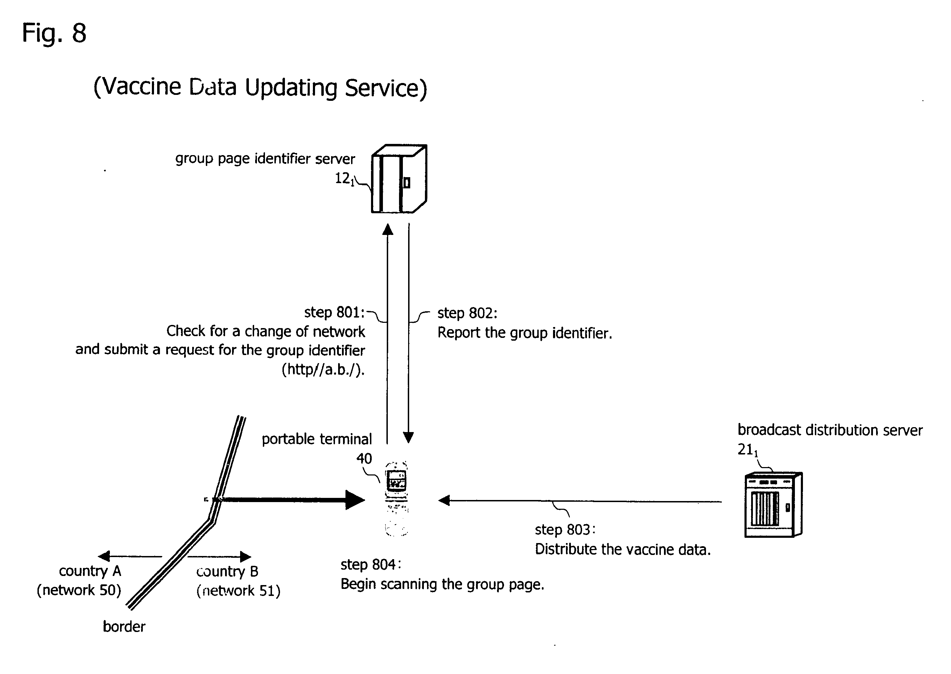

Referring to FIG. 8, in Step 801, when portable terminal 40 has moved from Country A (network 50) to Country B (network 51), from the base station (assumed to base station 31₁) to which portable terminal 40 is currently connected when the power supply is applied, base station information that indicates base station 31₁ and network information that indicates network 51 are transmitted to portable terminal 40. Based on this network information, terminal information transmitter 406 can determine that a network change has occurred, whereupon terminal information transmitter 406, by checking application information management unit 405, checks the group page identifier server (assumed to be group page identifier server 12₁) that has the URL "http://www.a.b/" that corresponds to application 401₁, and then transmits the position information and network information to group page identifier server 12₁ to request the group page identifier.

In Step 802, group page identifier transmitter 123 in group page identifier server 12₁ specifies the broadcast distribution server (here assumed to be broadcast distribution server 21₁) that distributes vaccine data to portable terminal 40 based on the position information and network information that have been transmitted from portable terminal 40, and then transmits to portable terminal 40 the group page identifier "1111444400001" of broadcast distribution server 21₁. In this way, the group page identifier of application 401₁ is updated to "1111444400001" by group page identifier receiver 407 in portable terminal 40.

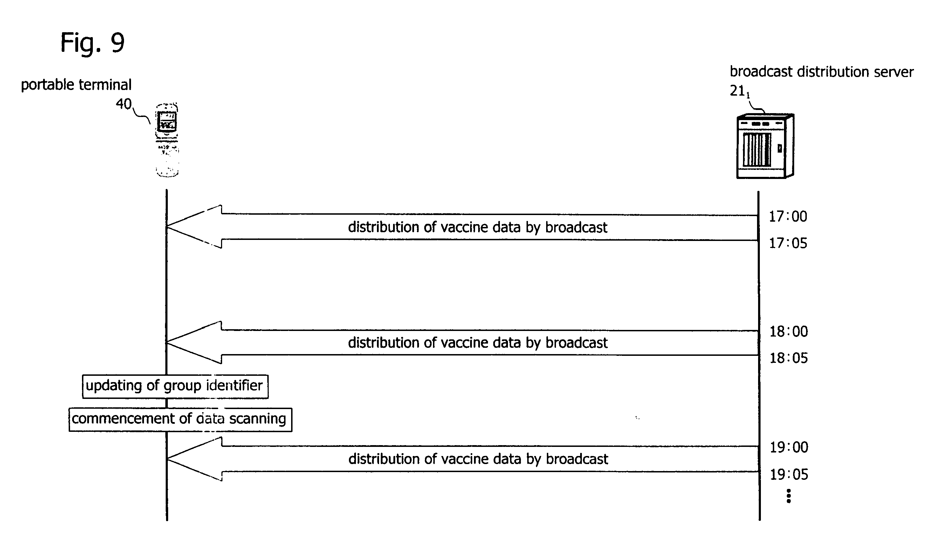

In Step 803, on the other hand, broadcast distribution server 21₁ distributes vaccine data by broadcast to which the group page identifier "1111444400001" has been appended to all portable terminals within a prescribed data distribution range (for example, all portable terminals under the jurisdiction of base station 31₁) at fixed time intervals. In the example of FIG. 9, broadcast distribution server 21₁ distributes vaccine data for five minutes of each hour.

In Step 804, when data to which the updated group page identifier has been appended are distributed by broadcast, group page receiver 408 in portable terminal 40 begins scanning these data to import the data. In the example of FIG. 9, the group page identifier is updated in portable terminal 40 during the time interval from 18:05 to 19:00, whereby group page receiver 408 takes in the vaccine data that are distributed by broadcast in the five-minute time interval that begins at 19:00.

Although explanation in this example regarded a case of application to a vaccine data updating service for virus eradication, the same operations are carried out for applications to other services (such as application software updating services) for which group page identifiers are updated at the timing when changes of network occurs.

### Actual Example 2

The present example is a case of an application for an emergency notification service. In other words, an application (here assumed to be application 401₂) for displaying emergency notification data, that is distributed when the emergency notification service is offered, is installed in portable terminal 40. In addition, the timing for updating the group page identifier of the present example is assumed to be the timing when the area changes to another prefecture.

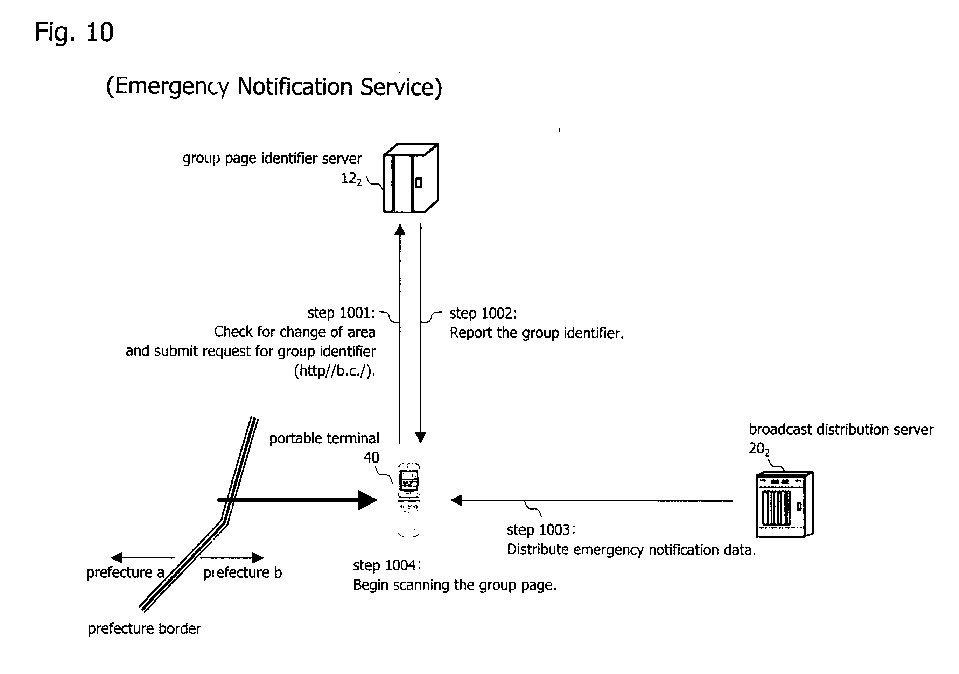

Referring to FIG. 10, in Step 1001, when portable terminal 40 moves from prefecture a to prefecture b within country A (network 50), base station information, from the base station (here assumed to be base station 30₂) that is the destination of movement, that indicates base station 30₂ and network information that indicates network 50 are transmitted to portable terminal 40. Based on this base station information, terminal information transmitter 406 is able to determine the occurrence of change to the area of prefecture b. Alternatively, terminal information transmitter 406 can determine the change to the area of prefecture b by collating area information management unit 404 based on GPS position information measured by position measurement unit 402. Terminal information transmitter 406 then collates application information management unit 405 to ascertain the group page identifier server (here assumed to be group page identifier server 12₂) that has the URL "http://www.b.c/" that corresponds to application 401₂, and transmits position information and network information to group page identifier server 12₂ to request the group page identifier.

In Step 1002, group page identifier transmitter 123 of group page identifier server 12₂, based on the position information and network information that have been transmitted from portable terminal 40, specifies the broadcast distribution server (here assumed to be broadcast distribution server 20₂) that distributes emergency notification data to portable terminal 40, and transmits the group page identifier "1111333300002" of broadcast distribution server 20₂ to portable terminal 40. In this way, the group page identifier of application 401₂ can be updated to "1111333300002" by group page identifier receiver 407 in portable terminal 40.

In Step 1003, broadcast distribution server 20₂ distributes emergency notification data to which the group page identifier "1111333300002" has been appended at fixed time intervals to all portable terminals within a prescribed data distribution range (for example, all portable terminals under the jurisdiction or base stations 30₂ and 30₃). Examples of these emergency notification data include message data reported by the police of each prefecture such as "Suspect at large!" or emergency weather information such as a typhoon alert or a tsunami alert.

In Step 1004, when emergency notification data to which the updated group page identifier has been appended are subsequently distributed by broadcast, group page receiver 408 in portable terminal 40 begins scanning these emergency notification data to import the data.

### Actual Example 3

In this example, the present invention is applied to a department store advertisement distribution service. In other words, an application (here assumed to be application 401₃) for displaying advertising, that is distributed when the department store advertisement distribution service is offered, is installed on portable terminal 40. In addition, the timing for updating the group page identifier of the present example is assumed to be the timing when a change of area to another district (such as to another district within the same prefecture or another district within the same city) occurs.

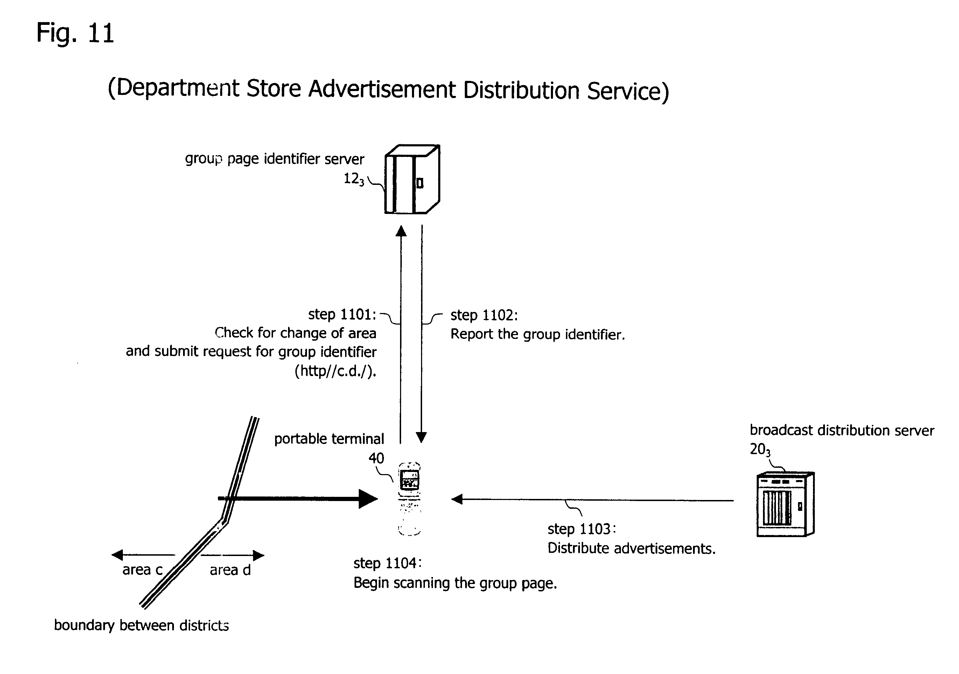

Referring to FIG. 11, in Step 1101, when portable terminal 40 moves from district c to district d within country A (network 50), from the base station (here assumed to be base station 30₃) of the destination of movement, base station information that indicates base station 30₃ and network information that indicates network 50 are transmitted to portable terminal 40. Based on this base station information, terminal information transmitter 406 is able to determine that a change to the area of district d has occurred. Alternatively, terminal information transmitter 406 is able to determine that an area change to district d has occurred by collating area information management unit 404 based or, GPS position information measured by position measurement unit 402. Terminal information transmitter 406 then collates application information management unit 405 to check the group page identifier server (here assumed to be group page identifier server 12₃) that has the URL "http://www.c.d/" that corresponds to application 401₃, and transmits position information and network information to group page identifier server 12₃ to request the group page identifier.

In Step 1102, group page identifier transmitter 123 in group page identifier server 12₃, based on the position information and network information that have been transmitted from portable terminal 40, specifies the broadcast distribution server (here assumed to be broadcast distribution server 20₃) that distributes advertising to portable terminal 40, and transmits the group page identifier "1111333300003" of broadcast distribution server 20₃ to portable terminal 40. In this way, the group page identifier of application 401₃ is updated to "1111333300003" by group page identifier receiver 407 in portable terminal 40.

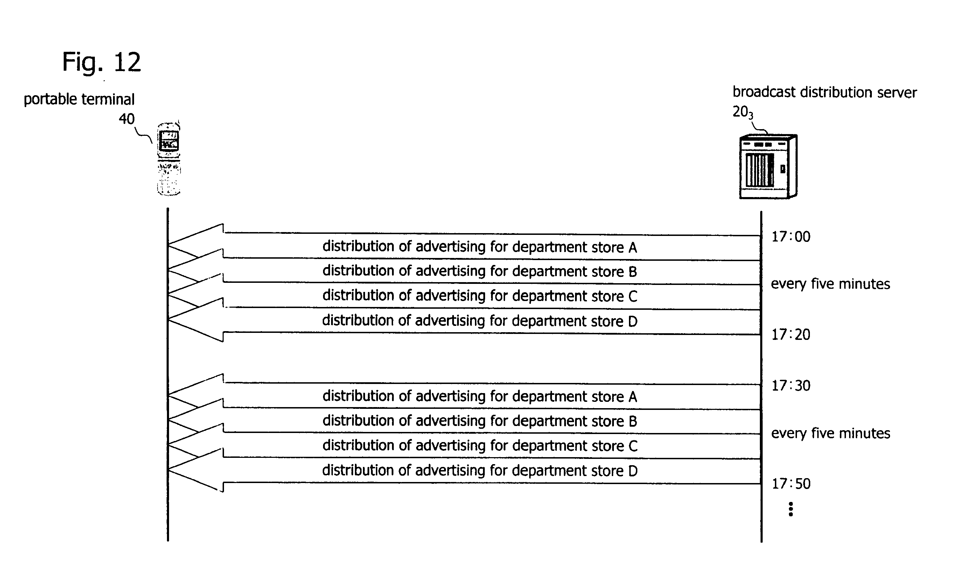

In Step 1103, broadcast distribution server 20₃ distributes advertising to which the group page identifier "1111333300003" has been appended to all portable terminals within a prescribed data distribution range (for example, all portable terminals under the jurisdiction of base stations 30₃ and 30₄) at fixed time intervals. Examples of this advertising include information on bargain sales. In the example of FIG. 12, broadcast distribution server 20₃ successively distributes advertising of five minutes' duration for each of department stores A-D for a total of 20 minutes every 30 minutes.

In Step 1104, when advertising to which the updated group page identifier has been appended is subsequently distributed by broadcast, group page receiver 408 in portable terminal 40 begins scanning the advertising to import the advertising.

### Actual Example 4

This example regards the application of the present invention to a local information notification service. In other words, an application (here assumed to be application 401₄) for displaying local information that is distributed, when offering the local information notification service, is installed in portable terminal 40. In addition, the timing for updating the group page identifiers in this example is assumed to be the timing when a change of area to another city occurs.

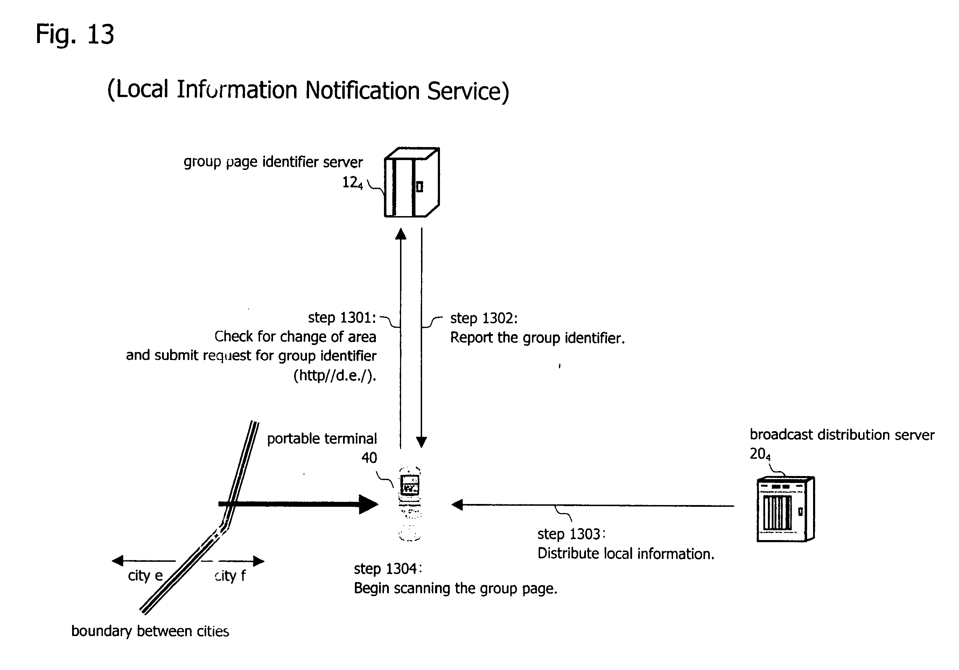

Referring to FIG. 13, in Step 1301, when portable terminal 40 moves from city e to city f within country A (network 50), from the base station (here assumed to be base station 30₄) of the destination of movement, base station information indicating base station 30₄ and network information indicating network 50 are transmitted to portable terminal 40. Based on this base station information, terminal information transmitter 406 is able to determine that a change of area to city f has occurred. Alternatively, terminal information transmitter 406 is able to determine that a change of area to city f has occurred by collating area information management unit 404 based on GPS position information that has been measured by position measurement unit 402. Terminal information transmitter 406 then collates application information management unit 405 to check the group page identifier server (here assumed to be group page identifier server 12₄) that has the URL "http://www.d.e/" that corresponds to application 401₄, and transmits position information and network information to group page identifier server 12₄ to request the group page identifier.

In Step 1302, group page identifier transmitter 123 in group page identifier server 12₄, based on the position information and network information that have been transmitted from portable terminal 40, specifies the broadcast distribution server (here assumed to be broadcast distribution server 20₄) that distributes local information to portable terminal 40, and transmits the group page identifier "1111333300004" of broadcast distribution server 20₄ to portable terminal 40. In this way, the group page identifier of application 401₄ can thus be updated to "1111333300004" by group page identifier receiver 407 in portable terminal 40.

In Step 1303, broadcast distribution server 20₄ distributes local information to which the group page identifier "1111333300004" has been appended to all portable terminals within a prescribed data distribution range (for example, all portable terminals under the jurisdiction of base stations 30₄ and 30₅) at fixed time intervals. Examples that can be offered as this local information include publicity information for local restaurants and entertainment facilities, local road congestion information, local maps, information on local events, and sightseeing information.

In Step 1304, when local information to which the updated group page identifier has been appended is subsequently distributed by broadcast, group page receiver 408 in portable terminal 40 begins scanning this local information to import the local information.

In the present embodiment as described in the foregoing explanation, portable terminal 40 transmits, at a prescribed timing for updating group page identifiers, position information and network information that respectively indicate the position of portable terminal 40 and the network to which portable terminal 40 is connected to request the group page identifier. The group page identifier server, based on the position information and network information from portable terminal 40, specifies the broadcast distribution server that distributes data by broadcast to portable terminal 40 and transmits to portable terminal 40 a group page identifier for scanning the data distributed from the specified broadcast distribution server.

As a result, a user who uses portable terminal 40 can, according to the position of portable terminal 40 and the network to which portable terminal 40 is connected, automatically acquire from group page identifier servers the group page identifiers required for scanning data distributed by broadcast from broadcast distribution servers. In this way, when a change of network covered by the portable network provider occurs or a change of area occurs, the user can continue to receive a broadcast service without any direct awareness of the movement.

In the present embodiment, moreover, portable terminal 40 is able to request group page identifiers for each application installed in portable terminal 40 at a prescribed timing for updating the group page identifiers and is able to automatically acquire the requested group page identifiers from group page identifier servers.

As a result, a user who uses portable terminal 40 is able to acquire only the group page identifiers for scanning data that accord with the applications installed in portable terminal 40 and is able to receive broadcast services for only necessary data.

In addition, in the present embodiment, an external device is provided with a data storage device and a group page identifier server as a set, and information management relating to a broadcast service can therefore be greatly simplified.

Finally, although a case was described in the present embodiment in which portable terminal 40, when updating group page identifiers, is able to use the browser function of portable terminal 40 to communicate with group page identifier servers, the present invention is not limited to this form. In other words, in communication between portable terminal 40 and group page identifier servers, communication methods such as e-mail and SMS (Short MeSsage) may also be used. In such cases, the e-mail address or telephone number of the group page identifier server is set instead of the URL shown in FIG. 6.

While preferred embodiments of the present invention have been described using specific terms, such description is for illustrative purposes only, and it is to be understood that changes and variations may be made without departing from the spirit or scope of the following claims.

## Claims

1. A group page system, comprising:
portable terminals;
a broadcast distribution server for distributing data by broadcast to said portable terminals; and
a group page identifier server for managing group page identifiers used by said portable terminals for scanning data that have been distributed by broadcast from said broadcast distribution server; wherein:
said portable terminals each include a terminal information transmitter for transmitting, to said group page identifier server at prescribed timing for updating said group page identifiers, said terminal information that includes network information that indicates the network to which said portable terminal is connected and position information of said portable terminal; and
said group page identifier servers each include a group page identifier transmitter for specifying a broadcast distribution server that distributes data by broadcast to a relevant portable terminal based on said terminal information that has been transmitted from said portable terminals and for transmitting to said portable terminals group page identifiers for scanning data that have been distributed from a broadcast distribution server that has been specified.

2. The group page system according to claim 1, wherein:
said portable terminal further comprises an application information management unit for managing, for each application installed in said portable terminal, group page identifiers for scanning data when these data are distributed by broadcast from said broadcast distribution servers in accordance with the relevant application and for managing the timing for updating these group page identifiers; and
said terminal information transmitter transmits, for each application installed in said portable terminal, said terminal information to said group page identifier servers at the timing for updating group page identifiers managed by said group page identifier management unit.

3. The group page system according to claim 2, wherein:
said application information management unit also manages, for each application installed in said portable terminal, access information that indicates the group page identifier server that is accessed at the timing for updating said group page identifiers; and
said terminal information transmitter specifies a group page identifier server that is accessed at the timing for updating said group page identifiers based on said access information and transmits said terminal information to the group page identifier server that has been specified.

4. The group page system according to claim 2, wherein:
said portable terminals each further include a terminal connection information receiver for receiving base station information that indicates the base station to which said portable terminal is connected and network information that indicates the network to which said portable terminal is connected; and
said terminal information transmitter transmits base station information that has been received by said terminal connection information receiver to said group page identifier server as said position information.

5. The group page system according to claim 4, wherein:
said application information management unit manages the timing at which the area in which said portable terminal is located changes as the timing for updating said group page identifier; and
said terminal information transmitter determines whether said area has changed or not based on base station information that is received by said terminal connection information receiver.

6. The group page system according to claim 2, wherein:
said portable terminals each further include: a position measurement unit for measuring the position of said portable terminal; and a terminal connection information receiver for receiving base station information that indicates the base station to which said portable terminal is connected and network information that indicates the network to which said portable terminal is connected; and
said terminal information transmitter transmits the position measured by said position measurement unit as said position information to said group page identifier server.

7. The group page system according to claim 6, wherein:
said application information management unit manages the timing of change of the area in which said portable terminal is located as the timing for updating said group page identifier; and
said terminal information transmitter determines whether said area has changed or not based on the result of position measurement by said position measurement unit.

8. The group page system according to claim 4, wherein:
said application information management unit manages the timing of change of the network to which said portable terminal is connected as the timing for updating said group page identifiers; and
said terminal information transmitter determines whether said network has changed or not based on network information that has been received by said terminal connection information receiver.

9. The group page system according to claim 1, wherein:
said group page identifier servers each further include a group page identifier management unit for managing, for each broadcast distribution server, group page identifiers for scanning data that are distributed by broadcast by a relevant broadcast distribution server and for managing the data distribution range in which data are distributed by broadcast by a relevant broadcast distribution server; and
said group page identifier transmitters, based on said terminal information transmitted from said portable terminals and the data distribution range for each of said broadcast distribution servers that is managed by said group page identifier management unit, specify a broadcast distribution server that distributes data by broadcast to said portable terminals.

10. The group page system according to claim 1, further comprising external devices each provided with:
a data storage device for storing data that are distributed by broadcast by said broadcast distribution servers; and
said group page identifier server for managing group page identifiers used in said portable terminals for scanning data stored in said data storage devices;
said data storage device and said group page identifier server being provided as a set.

11. The group page system according to claim 1, wherein said group page identifiers are TMGI of MBMS.

12. A portable terminal, said portable terminal acquiring from a group page identifier server group page identifiers used for scanning data that have been distributed by broadcast from a broadcast distribution server, said portable terminal comprising:
a terminal information transmitter for transmitting, to said group page identifier servers at prescribed timing for updating said group page identifiers, terminal information that includes: network information that indicates the network to which said portable terminal is connected; and position information of said portable terminal; and
a group page identifier receiver for receiving from said group page identifier server group page identifiers for scanning data that have been distributed from said broadcast distribution servers in accordance with said terminal information.

13. The portable terminal according to claim 12, further comprising an application information management unit for managing, for each application installed in said portable terminal, group page identifiers for scanning relevant data when data that accords with a relevant application are distributed by broadcast from said broadcast distribution server, and timing for updating relevant group page identifiers;
wherein said terminal information transmitter transmits said terminal information to said group page identifier server at the timing for updating group page identifiers managed by said group page identifier management unit for each application installed in said portable terminal.

14. The portable terminal according to claim 13, wherein:
said application information management unit also manages, for each application installed in said portable terminal, access information that indicates the group page identifier servers that are accessed at the timing for updating said group page identifiers; and
said terminal information transmitter specifies a group page identifier servers that are accessed at the timing for updating said group page identifiers based on said access information, and transmits said terminal information to a group page identifier server that has been specified.

15. The portable terminal according to clam 13, further comprising a terminal connection information receiver for receiving base station information that indicates the base station to which said portable terminal is connected and network information that indicates the network to which said portable terminal is connected;
wherein said terminal information transmitter transmits base station information that has been received by said terminal connection information receiver to said group page identifier server as said position information.

16. The portable terminal according to claim 15, wherein:
said application information management unit manages the timing of change of the area in which said portable terminal is located as the timing for updating said group page identifiers; and
said terminal information transmitter determines whether said area has changed or not based on base station information that has been received by said terminal connection information receiver.

17. The portable terminal according to claim 13, further comprising:
a position measurement unit for measuring the position of said portable terminal; and
a terminal connection information receiver for receiving base station information that indicates the base station to which said portable terminal is connected and network information that indicates the network to which said portable terminal is connected;
wherein said terminal information transmitter transmits the position measured by said position measurement unit to said group page identifier server as said position information.

18. The portable terminal according to claim 17, wherein:
said application information management unit manages the timing of change of the area in which said portable terminal is located as the timing for updating said group page identifiers; and
said terminal information transmitter determines whether said area has changed or not based on the results of position measurement by said position measurement unit.

19. The portable terminal according to claim 15, wherein:
said application information management unit manages the timing of change of the network to which said portable terminal is connected as the timing for updating said group page identifiers; and
said terminal information transmitter determines whether said network has changed or not based on network information that have been received by said terminal connection information receiver.

20. The portable terminal according to claim 12, wherein said group page identifiers are TMGI of MBMS.

21. A group page identifier server for managing group page identifiers used by portable terminals for scanning data that have been distributed by broadcast from broadcast distribution servers, said group page identifier server comprising:
a terminal information receiver for receiving from said portable terminal terminal information that includes network information that indicates the network to which the relevant portable terminal is connected and position information of the relevant portable terminal; and
a group page identifier transmitter for specifying a broadcast distribution server that distributes data by broadcast to a relevant portable terminal based on said terminal information that has been received by said terminal information receiver and for transmitting to said portable terminal group page identifiers for scanning data that have been distributed from a broadcast distribution server that has been specified.

22. The group page identifier server according to claim 21, further comprising a group page identifier management unit for managing, for each broadcast distribution server, group page identifiers for scanning data distributed by broadcast by a relevant broadcast distribution server, and data distribution ranges in which data are distributed by broadcast by a relevant broadcast distribution server;
wherein said group page identifier transmitter, based on said terminal information transmitted from said portable terminals and data distribution range for each of said broadcast distribution servers managed by said group page identifier management unit, specifies a broadcast distribution server that distributes data by broadcast to said portable terminal.

23. The group page identifier server according to claim 21, wherein said group page identifiers are TMGI of MBMS.
